# EUROPÄISCHE PATENTANMELDUNG

(11) **EP 3 284 993 A1**
(43) Veröffentlichungstag der Anmeldung: **21.02.2018**
(21) Anmeldenummer: 16184348.7
(22) Anmeldetag: 16.08.2016
(51) Int. Cl.: F16L 11/112, F16L 11/24

(54) **FLEXIBLE SCHLAUCHLEITUNG MIT INTEGRIERTEM SENSORMATERIAL**

(71) Anmelder: Masterflex SE, 45891 Gelsenkirchen (DE)
(72) Erfinder: Nüßen, Stefan, 45879 Gelsenkirchen (DE); Seoane, Enrique, 38114 Braunschweig (DE); Jacobi, Joachim, 44803 Bochum (DE); Kapteina, Tanja, 44651 Herne (DE); Krossa, Rita, 45891 Gelsenkirchen (DE)
(74) Vertreter: Uexküll & Stolberg

(57) **Zusammenfassung**

Die vorliegende Erfindung betrifft eine flexible Schlauchleitung mit einer Wandung, wobei die Wandung integriertes Sensormaterial aufweist, das eine sich mit einem zu ermittelnden Betriebsparameter der Schlauchleitung veränderliche Materialeigenschaft hat.

## Beschreibung

Die vorliegende Erfindung betrifft eine flexible Schlauchleitung mit integriertem Sensormaterial.

Schlauchleitungen kommen insbesondere dann zur Anwendung, wenn flexible Verbindungen zur Übertragung von Feststoffen oder von flüssigen oder gasförmigen Medien benötigt werden. Die Auswahl einer Schlauchleitung richtet sich in der Regel nach den spezifischen Anforderungen der vorgesehenen Anwendung, so dass eine Vielzahl von Eigenschaften der Schlauchleitung wie z.B. Durchmesser, Mindestbiegeradius, Druckbelastung und Temperaturbeständigkeit zu berücksichtigen ist.

In vielen Fällen werden Schlauchleitungen in Betriebsanlagen eingesetzt und die Betreiber von solchen Anlagen müssen zur Überwachung von sicherheitsrelevanten Betriebsparametern Messsonden durch aufwendige Maßnahmen so positionieren, dass sie z.B. den Volumenstrom eines Mediums analysieren bzw. überwachen können. Hierzu müssen Teile der Anlagenperipherie oftmals aufwendig umkonstruiert werden, um die Sonde in die erforderliche Position zu bringen. Aussagen zu dem Zustand der Schlauchleitung selbst sind auf diese Art und Weise jedoch nicht oder nur begrenzt möglich.

Grundsätzlich wäre es wünschenswert, Betriebs- und Funktionalitätsparameter einer gesamten Betriebsanlage, d.h. nicht nur an ausgewählten Punkten in der Anlagenperipherie, sondern auch die Betriebsparameter der darin enthaltenen Schlauchleitungen, vorzugsweise in Echtzeit zu überwachen. So können beispielsweise eine gleichbleibende Produktqualität gewährleistet werden und Störungen des Betriebsablaufs verhindert werden, da mögliche Störungsursachen wie z.B. eine Überbeanspruchung des Schlauchmaterials schnell erkannt und dann behoben werden können. Auf diese Weise können die Lebensdauer und Zuverlässigkeit von Schlauchleitungen erhöht werden, Schlauchleitungsausfälle minimiert werden, Arbeitskräfte geschützt werden und eine hohe Qualität, Produktionssicherheit und Kosteneffizienz garantiert werden.

Der vorliegenden Erfindung liegt somit die Aufgabe zugrunde, eine flexible Schlauchleitung bereitzustellen, die auf einfache Art und Weise eine Überwachung von Betriebs- und Funktionalitätsparametern der Schlauchleitung ermöglicht. Zu den zu überwachenden Parametern sollen beispielsweise, aber nicht ausschließlich, die Temperatur der Schlauchwandung und/oder des Mediums in der Kontaktzone, der auf die Schlauchwandung einwirkende Über- oder Unterdruck, der Biegeradius der Schlauchleitung, das Vorhandensein von Verengungen des Innendurchmessers der Schlauchleitung, die Vibration der Schlauchleitung, die Dehnung oder Kompression der Schlauchleitung, die Integrität der Schlauchwandung und der Alterungsgrad des Materials der Schlauchwandung zählen.

Diese Aufgabe wird durch die flexible Schlauchleitung gemäß Anspruch 1 gelöst. Vorteilhafte Ausführungsformen der erfindungsgemäßen Schlauchleitung werden in den Unteransprüchen offenbart.

Die Erfindung betrifft somit eine flexible Schlauchleitung mit einer Wandung, wobei die Wandung integriertes Sensormaterial aufweist, das eine sich mit einem zu ermittelnden Betriebsparameter der Schlauchleitung veränderliche Materialeigenschaft hat.

Unter dem Begriff "flexible Schlauchleitung" im Sinne dieser Anmeldung werden biegsame Schlauchleitungen an sich sowie Schlauchkupplungen und deren Teile verstanden. Die Schlauchleitung nimmt üblicherweise die Gestalt eines langgestreckten, zylinderförmigen Hohlkörpers an. Ggf. weist die Schlauchleitung an einem oder an beiden ihrer Enden eine Schlauchkupplung oder ein Teil einer Schlauchkupplung, ein sog. Anschlussstück, auf, mit Hilfe derer die Schlauchleitung mit z.B. einer anderen Schlauchleitung oder anderen Einheiten, wie einer festen Rohrleitung oder anderen Teilen einer Anlageneinheit, verbunden werden kann.

In einer bevorzugten Ausführungsform der vorliegenden Erfindung umfasst die Wandung der Schlauchleitung thermoplastischen Kunststoff. Lediglich beispielshaft und nicht einschränkend seien hierzu Silikone oder thermoplastische Elastomere auf Urethanbasis (TPU), d.h. Polyurethan (PU), wie z.B. Polyether-Polyurethan und Polyester-Polyurethan, Polyvinylchlorid (PVC) oder Polyethylen (PE) genannt, aber auch thermoplastische Vulkanisate (TPV), wie Santropene. Weitere geeignete Materialien stellen insbesondere thermoplastische Elastomere dar, wie:
- TPA (Thermoplastische Copolyamide)
- TPC (Thermoplastische Polyesterelastomere / Thermoplastische Copolyester)
- TPO (Thermoplastische Elastomere auf Olefinbasis), z.B. PP/EPDM
- TPS (Styrol-Blockcopolymere, z.B. SBS, SEBS, SEPS, SEEPS und MBS).

Derartige thermoplastische Schlauchleitungen können beispielsweise in der Weise hergestellt werden, dass der thermoplastische Kunststoff direkt in die Form der gewünschten Schlauchleitung extrudiert wird. Alternativ kann der thermoplastische Kunststoff z.B. mittels Extrusion in die Form einer Werkstoffbahn, wie z.B. einer extrudierten Profilfahne oder einer Folienbahn, überführt werden, die anschließend helixförmig aufgewickelt wird und bei der Längskantenabschnitte benachbarter Wendelwicklungen bzw. die gegenüberliegenden Randbereiche der Werkstoffbahn überlappend miteinander verbunden werden. Ferner ist auch möglich, dass die Schlauchwandung mehrere Lagen oder Schichten des thermoplastischen Kunststoffes umfasst, die z.B. in Form von mehreren Folienlagen übereinander angeordnet sind ("Sandwich-Bauweise").

In einer weiteren bevorzugten Ausführungsform der vorliegenden Erfindung umfasst die Wandung der Schlauchleitung ein Gewebe. Das Material des Gewebes ist vorzugsweise ausgewählt aus der Gruppe bestehend aus Glasfasern, Textilfasern, mineralischen Fasern, Aramidfasern, metallischem Gewebe, wie z.B. Edelstahl, wie Edelstahl 1.4301, Kunststoffasern, wie z.B. Polyamid- und/oder Polyesterfasern, und Kombinationen davon. Das Gewebe kann unbeschichtet sein oder mit Kunststoffen und insbesondere den oben genannten thermoplastischen Kunststoffen oder Elastomeren, wie z.B. Neopren, Hypalon und Viton, beschichtet sein. Alternativ können auch Kaschierungen von Geweben mit entsprechenden Folien eingesetzt werden. Derartige Gewebeschlauchleitungen können beispielsweise in der Weise hergestellt werden, dass ein oder mehrere beschichtete oder unbeschichtete Gewebebänder mittels eines Klemm-, Näh-, Schweiß- oder Vulkanisierungsverfahrens zu der gewünschten Schlauchleitung verbunden werden.

Gemäß einer weiteren Ausführungsform weist die Wandung der erfindungsgemäßen Schlauchleitung, wie z.B. einer thermoplastischen Schlauchleitung oder einer Gewebeschlauchleitung, ein Verstärkungselement, wie z.B. eine helixförmig verlaufende Verstärkungswendel auf. In dieser Ausführungsform stellt die erfindungsgemäße Schlauchleitung somit einen sog. Spiralschlauch dar. Bei derartigen Schlauchleitungen kann das Verstärkungselement vollständig in die Schlauchwandung eingebettet sein, so dass es durch die Schlauchwandung von dem Schlauchinneren und dem Schlauchäußeren getrennt ist. Es ist auch möglich, dass das Verstärkungselement nur teilweise in die Schlauchwandung eingebettet ist und ein Abschnitt des Verstärkungselements zum Schlauchinneren oder Schlauchäußeren hin freiliegt. So ist es beispielsweise möglich, dass das Verstärkungselement auf der äußeren Oberfläche der Schlauchwandung angeordnet ist.

Derartige Schlauchleitungen mit helixförmig verlaufender Verstärkungswendel können z.B. in der Weise hergestellt werden, dass eine Werkstoffbahn, an der die Verstärkungswendel befestigt ist, schraubenlinienförmig aufgewickelt wird. Die Werkstoffbahn umfasst vorzugsweise ein oder mehrere der oben genannten thermoplastischen Kunststoffe. Ein bekanntes Verfahren sieht z.B. vor, dass eine als Profilfahne extrudierte Werkstoffbahn um einen Fertigungsdorn oder dergleichen aufgewickelt und der bereits auf den Fertigungsdorn aufgewickelte Teil der Bahn von diesem axial abgezogen werden, so dass die Bahn helixförmig aufgewickelt wird. Der Randbereich des neu auf den Fertigungsdorn auftreffenden Bahnabschnitts wird mit dem Randbereich des Bahnabschnitts verbunden, der den Dorn bereits einmal umschlungen hat. Auf diese Weise kann eine Schlauchleitung gebildet werden, die mit einem helixförmig verlaufenden Verstärkungselement versehen ist. Die Längskantenabschnitte benachbarter Wendelwicklungen bzw. die gegenüberliegenden Randbereiche der Werkstoffbahn können überlappend miteinander verbunden werden. Neben einer extrudierten Profilfahne kann auch ein Folienstreifen als Werkstoffbahn bereitgestellt werden, wobei der Folienstreifen derart gewendelt wird, dass benachbarte Randbereiche überlappen. In bevorzugter Weise werden die überlappenden Randbereiche durch Verschweißen miteinander verbunden.

Erfindungsgemäß weist die Wandung der erfindungsgemäßen Schlauchleitung ein integriertes Sensormaterial auf. Insbesondere kann das Sensormaterial vollständig oder teilweise in die Schlauchwandung eingebettet sein. Alternativ kann es in Form einer Beschichtung auf der Innenseite und/oder der Außenseite der Schlauchleitung oder in Form einer Beschichtung einer Komponente der Schlauchwandung, wie z.B. eines Vertärkungselements, angeordnet sein. Es ist auch möglich, dass das Sensormaterial gleichmäßig über die gesamte Schlauchwandung oder nur in einem Teil davon, wie z.B. einer Werkstoffbahn, angeordnet ist.

Das Sensormaterial weist mindestens eine Materialeigenschaft auf, die in Abhängigkeit mindestens eines zu ermittelnden Betriebsparameters der Schlauchleitung veränderlich ist. Unter "Betriebsparameter" im Sinne dieser Anmeldung ist eine Zustandsgröße der Schlauchleitung zu verstehen, die insbesondere ausgewählt ist aus der Gruppe bestehend aus der Temperatur der Schlauchwandung, z.B. der Temperatur im Inneren der Schlauchwandung oder der Temperatur an der inneren Oberfläche der Schlauchwandung, so dass auf die Temperatur des in der Schlauchleitung befindlichen Mediums geschlossen werden kann; dem auf die Schlauchwandung einwirkenden Über- oder Unterdruck; der Integrität der Schlauchwandung; dem Biegeradius der Schlauchleitung; der Dehnung oder Kompression der Schlauchleitung; der Vibration, der die Schlauchleitung ausgesetzt ist; und dem Alterungsgrad des Materials der Schlauchwandung. Das Sensormaterial ist derartig ausgestaltet, dass es zur Bestimmung mindestens eines Betriebsparameters geeignet ist.

Die erfindungsgemäße Schlauchleitung weist somit den großen Vorteil auf, dass aufgrund des in der Schlauchwandung enthaltenen Sensormaterials ein oder mehrere gewünschte Betriebsparameter der Schlauchleitung auf einfache Art und Weise direkt und ohne Verwendung von externen Messsonden bestimmbar sind.

Vorzugsweise ist das Sensormaterial in Form von mindestens einem Additiv und/oder in Form von mindestens einem Messwertaufnehmer ausgebildet.

Gemäß einem ersten Aspekt der vorliegenden Erfindung ist das Sensormaterial in Form von mindestens einem Additiv ausgebildet.

In einer bevorzugten Ausführungsform dieses Aspekts ist das Additiv ausgewählt aus der Gruppe bestehend aus thermochromen Additiven, piezochromen Additiven, piezoelektrischen Additiven, photochromen Additiven und Mischungen davon.

In einer Ausführungsform dieser Erfindung umfasst die Wandung der Schlauchleitung thermochromes Additiv. Der Begriff "thermochromes Additiv" bezeichnet Additive, insbesondere Pigmente, die bei Änderung der Temperatur den von ihnen erzeugten Farbeindruck verändern. Die Farbänderung kann entweder eine Veränderung der visuell wahrnehmbaren Farbe beinhalten, indem beispielsweise der Wellenlängenbereich, in dem Licht von dem Additiv absorbiert bzw. reflektiert wird, verändert wird, oder ein deutliches Abnehmen bzw. Zunehmen der Farbigkeit, d.h. der Farbintensität, beinhalten.

Im Rahmen dieser Erfindung kann der Farbwechsel bei den thermochromen Additiven fortlaufend über ein bestimmtes Temperaturintervall oder als deutlicher Farbumschlag bei einer spezifischen Umschlagstemperatur oder einem sehr kleinen Temperaturbereich erfolgen. In einer bevorzugten Ausführungsform werden solche thermochromen Additive ausgewählt, die eine Umschlagstemperatur in dem in der jeweiligen vorgesehenen Anwendung zu detektierenden Temperaturbereich aufweisen. Beispielsweise kann die Umschlagstemperatur je nach Einsatzgebiet der Schlauchleitung zwischen -30°C und +150°C liegen und z.B. etwa -20°C, -10°C, 0°C, 10°C, 20°C, 30°C, 40°C, 50°C, 60°C, 70°C oder 80°C betragen.

Das thermochrome Additiv kann durch eine irreversible Thermochromie, d.h. die durch Erwärmung hervorgerufene Farbänderung bleibt auch nach dem Abkühlen auf eine Temperatur unterhalb des Umschlagspunkts erhalten, oder eine reversible Thermochromie gekennzeichnet sein, d.h. das Additiv nimmt nach einer durch Erwärmung hervorgerufenen Farbänderung beim Abkühlen auf eine Temperatur unterhalb seiner Umschlagstemperatur wieder seine ursprüngliche Farbe an.

In einer weiteren Ausführungsform kann das thermochrome Additiv einen sog. "Erinnerungseffekt" (memory effect) aufweisen, d.h. dass die Farbänderungstemperatur bei einer Temperaturerhöhung eine andere als beim Abkühlen ist. Bei einer Auftragung der Farbintensität in Abhängigkeit der Temperatur kann in diesem Fall eine Hysterese beobachtet werden. Es kann so ein einmaliges Über- oder Unterschreiten der Temperatur auch nach einer erneuten Temperaturänderung detektiert werden.

Beispielsweise wird erfindungsgemäß vorgesehen, dass das thermochrome Additiv bei einer bestimmten Temperatureinwirkung dauerhaft oder reversibel die Farbe wechselt und somit eine eingetretene Überschreitung einer vorgesehenen Betriebstemperatur optisch erkennbar wird.

Das thermochrome Additiv ist vorzugsweise ein organisches oder anorganisches Additiv.

In einer bevorzugten Ausführungsform der vorliegenden Erfindung umfasst ein organisches thermochromes Additiv (a) eine elektronenabgebende chromatische organische Verbindung, (b) einen Elektronenakzeptor, (c) ein Reaktionsmedium, das die Temperatur bestimmt, bei der die Farbänderungsreaktion der Komponente (a) mit der Komponente (b) stattfindet, und ggf. (d) einen Farbveränderungstemperatur-Regulator. Beispiele von thermochromen reversiblen Pigmenten mit dieser Art von Zusammensetzungen werden beispielsweise in der US 5,919,404, US 6,494,950 und EP 1323540 beschrieben. Beispiele von thermochromen Pigmenten mit "Erinnerungseffekt" mit dieser Art von Zusammensetzung finden sich in US 2016/0130455 A1, US 6,494,950 und US 2013/0210622 A1.

Die elektronenabgebende chromatische organische Verbindung (a) kann aus einer Reihe von konventionellen, im Stand der Technik bekannten Verbindungen wie z.B. Verbindungen, die von Diphenylmethanphthalid, Phenylindolyl-phthalid, Indolylphthalid, Diphenylmethanazaphthalid, Phenylindolylazaphthalid, Fuoran, Styrylquinolin, Diazarhodaminlakton abgeleitet sind, sowie Pyridin-, Quinazolin-, und Bisquinazolinverbindungen ausgewählt sein.

Der Elektronenakzeptor (b) kann aus der Gruppe von Verbindungen mit mindestens einem aktiven Proton, Pseudosäure-Verbindungen (Verbindungen, die keine Säure sind jedoch als Säure in der Zusammensetzung wirken, um die Entwicklung einer Farbe des Bestandteil (a) zu bewirken) und Verbindungen mit einem Elektronenloch sowie Gallsäureester oder Alkoxyphenole der Formel I ausgewählt sein.

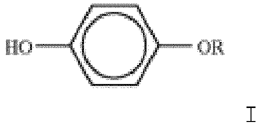

Das Reaktionsmedium (c) sollte bei reversiblen thermochromatischen Additiven so gewählt werden, dass es eine reversible Elektronendonor/Akzeptor-Reaktion ermöglicht. Bei Reaktionen mit "Erinnerungseffekt", die einen großen Hysterese-Effekt aufweisen sollen, können spezielle Reaktionsmedien eingesetzt werden. So können im Rahmen der hier offenbarten Erfindung unter anderem die in US 2016/0130455 A1 beschriebenen Ester der Formel (II) 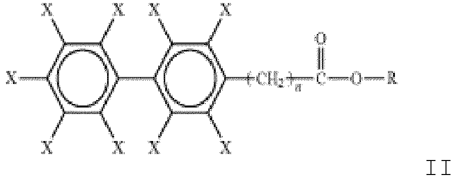 oder die in US 2013/0210622 A1 beschriebenen Ester der Formel III verwendet werden.

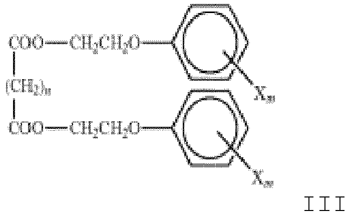

Komponente (d) kann aus einem oder mehreren hochschmelzenden Estern, Alkoholen, Ketonen, Säureamiden und Kohlenwasserstoffen ausgewählt sein. Vorzugsweise ist der Farbveränderungstemperatur-Regulator (d) ein aliphatischer Ester, ein aliphatisches Keton, ein aliphatischer Alkohol, ein aliphatisches Säureamid oder eine gesättigte Fettsäure.

Durch Mischen der Bestandteile (a), (b), (c) und ggf. (d) wird eine thermochrome Zusammensetzung erhalten, die sich als thermochromes Additiv zur Verwendung in der erfindungsgemäßen Schlauchleitung eignet. Die Anteile der Bestandteile können abhängig von den gewünschten Farbdichten, Farbveränderungstemperaturen und Farbveränderungsverhalten variiert werden.

Weiterhin können im Rahmen dieser Erfindung auch thermochrome Additive eingesetzt werden, die Leukofarbstoffe enthalten. Mögliche Leukofarbstoffe sind hierbei unter anderem Farbstoffe, die von Spirolakton, Fluoran, Spiropyran und Fulgid abgeleitet sind. Als Protonendonoren können unter anderen Säuren wie Bisphenol A, Parabene, 1,2,3-Triazolderivate, und 4-Hydroxycumarin eingesetzt werden.

Weiterhin können im Rahmen dieser Erfindung auch thermochrome Pigmente auf Basis von Flüssigkristallen, wie z.B. Biphenyle oder Cholesterinderivate, zum Einsatz kommen.

In einer weiteren bevorzugten Ausführungsform der vorliegenden Erfindung umfasst das thermochrome Additiv ein anorganisches thermochromes Pigment.

Beispiele für anorganische thermochrome Pigmente mit einem kontinuierlichen Farbwechsel, die im Rahmen dieser Erfindung eingesetzt werden können, sind unter anderem ZnO oder TiO₂.

Beispiele für anorganische thermochrome Pigmente mit einer spezifischen Übergangstemperatur sind unter anderem Kupfer(II)-Verbindungen, die das komplexe Anion [CuCl₄]²⁻ enthalten. Ein Beispiel dieser Klasse von Verbindungen ist Bis (diethylammonium) tetrachlorcuprat (II), [(C₂H₅)₂NH₂]₂[CuCl₄], sein, welches einen Farbwechsel von grün zu gelb bei 43°C aufweist.

Weitere Beispiele für anorganische thermochrome Pigmente umfassen HgI₂, AgI, Ag₂HgI₄, CdS, CdSe und Cu₂HgI₄.

In einer weiteren Ausführungsform der Erfindung umfasst die Wandung der Schlauchleitung photochromes Additiv. Der Begriff "photochromes Additiv" bezeichnet hierin Additive, insbesondere Pigmente, die bei Bestrahlung mit UV-Licht ihren erzeugten Farbeindruck verändern, indem beispielsweise der Wellenlängenbereich, in dem Licht von dem Additiv absorbiert bzw. reflektiert wird, reversibel oder irreversibel verändert wird. Beispielsweise wird erfindungsgemäß vorgesehen, dass das photochrome Additiv nach einer bestimmten Lichteinfallmenge dauerhaft die Farbe wechselt und somit eine eingetretene Überschreitung eines vorgesehenen Betriebs- bzw. Gebrauchszeitraums der Schlauchleitung optisch erkennbar wird. Es kann somit der Alterungsgrad der Schlauchwandung ermittelt werden. Darüber hinaus können photochrome Additive auch eingesetzt werden, um durch ihre Farbänderung die Schlauchleitung vor UV-Alterung zu schützen bzw. diese zu verzögern.

Das photochrome Additiv kann je nach gewünschtem Einsatzbereich der Schlauchleitung organische und/oder anorganische photochrome Pigmente umfassen.

Beispiele für geeignete photochrome Additive umfassen Verbindungen, die aus der Gruppe der Azobenzene, Salicylidenaniline und Fulgiden abgeleitet sind. Weitere Beispiele für geeignete photochrome Additive umfassen Verbindungen, die von Spiroverbindungen abgeleitet sind, wie z.B. Verbindungen aus der Gruppe der Spiropyrane, wie beispielsweise Spiroindolinbenzopyran, oder Spirooxazine, wie beispielsweise Spiroindolinnaphthoxazin und Spiroindolinpyridobenzoxazin. In einer weiteren Ausführungsform umfasst das photochrome Additiv Veresterungsprodukte von Acrylsäure oder Methacrylsäure und einem Polyol, z.B. einem Diol, Triol oder Tetracarbinol, wie sie in WO 89/05464 beschrieben werden. Alternativ können photochrome Pigmente verwendet werden, wie sie in der US 2005/0066453 A1 beschrieben werden.

In einer weiteren bevorzugten Ausführungsform der Erfindung umfasst die Wandung der Schlauchleitung ein piezochromes Additiv. Der Begriff "piezochromes Additiv" bezeichnet hierin Additive, insbesondere Pigmente, die aufgrund einer Änderung ihrer räumlichen Ausdehnung, beispielsweise in Folge des Einwirkens eines mechanischen Drucks, den von ihnen erzeugten Farbeindruck verändern, indem beispielsweise der Wellenlängenbereich, in dem Licht von dem Additiv absorbiert bzw. reflektiert wird, verändert wird. Die Farbänderung kann je nach Einsatzzweck der Schlauchleitung fortlaufend über ein großes Druckintervall oder bei einem spezifischen Umschlagsdruck oder in einem sehr kleinen Druckbereich erfolgen. In einer bevorzugten Ausführungsform wird das piezochrome Additiv so ausgewählt, dass sein Umschlagsdruck in dem zu detektierenden Druckbereich oder im Bereich der zu detektierenden mechanischen Belastung liegt. Beispielsweise weist das piezochrome Additiv einen Umschlagsdruck von < 0,3 bar, < 0,4 bar, < 0,5 bar, < 1 bar, < 2 bar, < 5 bar oder < 10 bar auf. Beispielsweise wird erfindungsgemäß vorgesehen, dass das piezochrome Additiv bei einer bestimmten Druckeinwirkung dauerhaft die Farbe wechselt und somit eine eingetretene Überschreitung eines vorgesehenen Biegeradius der Schlauchleitung, einer vorgesehenen Dehnung bzw. Kompression der Schlauchleitung oder eines vorgesehenen Betriebsdruckes der Schlauchleitung optisch erkennbar wird.

Im Rahmen dieser Erfindung kann das piezochrome Additiv ein anorganisches oder organisches piezochromes Pigment sein. Beispiele für geeignete piezochrome Additive umfassen anorganische Monokristalle, wie z.B. kristalline Salze wie LiF oder NaCl. Ein weiteres Beispiel stellt das anorganische Salz CuMoO₄ dar, das einen Farbübergang von Grün auf Rot bei einem Druck von 2,5 kBar aufweist.

In Ausführungsformen, bei denen ein Farbübergang bei niedrigeren Drücken gewünscht wird, werden in der Regel organische Polymer-Materialien als piezochrome Pigmente bevorzugt.

Ein Beispiel eines organischen piezochromen Additivs ist Poly(3-dodecylthiophen), das eine bathochrome Absorptionsverschiebung bei Änderung des Drucks von Normaldruck zu 8 kbar aufweist. Auch Poly[3-(1-dodecyl)thiophen-2,5-diyl] weist eine bathochrome Verschiebung der Absorption bei einem Druckanstieg von Normaldruck auf 10.71 GPa auf.

Beispiele für geeignete piezochrome Additive umfassen auch Poly(3-dodecylthiophen), Poly[3-(1-dodecyl)thiophen-2,5-diyl] sowie piezochrome Additive wie sie in der WO 2005/092995 beschrieben sind, bei denen ein piezochromes System aus einer ionochromen Substanz und einem Entwickler verwendet wird, wobei ein Elektronen-Donor-System ausgebildet wird. Als ionochrome Substanzen können pH-sensitive Farbstoffe oder Leukofarbstoffe wie z.B. Phthalidderivate, Derivate von Imidazol, Pyrrol, Bianthron, Xanthylidenanthron, Dixanthylen oder Helianthron verwendet werden.

Weitere Beispiele für geeignetes piezochromes Additiv sind in der DE 10 2009 035 363 A1 beschrieben. Alternativ kann als piezochromes Additiv eine Mischung aus Cholesteryloleylcarbonat, Cholesterylchlorid und Cholesterylnonanat verwendet werden, wobei in einer bevorzugten Ausführungsform diese drei Verbindungen in einem Gewichtsprozent-Verhältnis von 13,9 : 32,9 : 53,2 eingesetzt werden.

In einer weiteren bevorzugten Ausführungsform der Erfindung umfasst die Wandung der Schlauchleitung ein piezoelektrisches Additiv. Der Begriff "piezoelektrisches Additiv" bezeichnet hierin Additive, insbesondere Pigmente, bei denen eine elastische Verformung, z.B. durch einen Druck oder eine mechanische Belastung, zu einer Änderung der elektrischen Polarisation und somit zu einem Auftreten einer elektrischen Spannung an den Additivfestkörpern führt. Beispielsweise wird erfindungsgemäß vorgesehen, dass das piezoelektrische Additiv bei einer bestimmten Druck- oder Temperatureinwirkung dauerhaft oder reversibel sein elektrisches Verhalten wechselt und somit eine eingetretene Überschreitung einer vorgesehenen Betriebstemperatur, eines vorgesehenen Biegeradius der Schlauchleitung, einer vorgesehenen Dehnung bzw. Kompression der Schlauchleitung oder einer vorgesehenen Betriebsdruckes der Schlauchleitung anhand des geänderten elektrischen Verhaltens erkennbar wird. Auf diese Weise kann auch eine Vibration der Schlauchleitung erkennbar gemacht werden.

Im Rahmen dieser Erfindung kann das piezoelektrische Additiv ein anorganisches oder organisches Additiv sein.

In einer bevorzugten Ausführungsform ist das piezoelektrische Additiv ein piezoelektrischer Kristall wie zum Beispiel Quarz, Lithiumniobat, Berlinit, Minerale der Turmalingruppe oder Seignettesalz.

Weitere Beispiele für geeignete piezoelektrische Additive umfassen piezoelektrische synthetische Keramikmaterialien, wie (modifizierte) Blei-Zirkonat-Titanate (PZT), Bariumtitanate (BTO) oder Blei-Magnesium-Niobate (PMN), oder andere piezoelektrische Materialien, wie Polyvinylidenfluorid (PVdF).

In einer weiteren bevorzugten Ausführungsform kann das piezoelektrische Additiv ein piezoelektrisches Komposit-Material sein, bei dem Partikel eines stark piezoelektrischen Materials in einer Matrix eines strukturierten Materials zusammengehalten werden. Alternativ können auch piezoelektrische Dünnschichten aus z.B. Zinkoxid (ZnO) oder Aluminiumnitrid (AlN) eingesetzt werden.

Die oben beschriebenen thermochromen, photochromen, piezochromen oder piezoelektrischen Additive werden vorzugsweise in Form eines Masterbatches vor oder während eines Extrusionsvorganges zu einer Kunststoffzusammensetzung gegeben. So kann das Additiv auf einfache Weise gleichmäßig in einen Kunststoff eingebracht werden, der später die Wandung der Schlauchleitung oder einen gewünschten Teil der Schlauchwandung, wie z.B. eine Beschichtung auf der Innenseite oder Außenseite der Schlauchleitung, eine Beschichtung eines Verstärkungselements oder eine Beschichtung eines Gewebes, oder einen gewünschten Teil einer Schlauchkupplung, wie z.B. eines Anschlussstückes, bildet.

In einer bevorzugten Ausführungsform liegen die thermochromen, photochromen, piezochromen oder piezoelektrischen Additive in einer mikroverkapselten Form vor. Für die Mikroverkapselung können konventionelle, im Stand der Technik bekannte Techniken verwendet werden. Beispiele hierfür umfassen eine Grenzflächen-Polymerisation, *in situ* Polymerisation, eine Aushärtungsbeschichtung in Flüssigkeit, eine Phasentrennung aus einer wässrigen Lösung, eine Phasentrennung aus einem organischen Lösungsmittel, eine Schmelz-Dispersions-Abkühlung, eine Luftsuspensionsbeschichtung und Sprühtrocknen. Bevor die Mikrokapseln einer Verwendung im Sinne dieser Erfindung zugeführt wird, kann ihre Oberfläche mit einem zusätzlichen Harzfilm beschichtet werden, um dadurch die Haltbarkeit zu erhöhen oder die Oberflächeneigenschaften zu modifizieren und somit die Kompatibilität mit dem Kunststoff der Schlauchwandung und das Einbringen des Additivs zu verbessern.

Das Additiv kann in einer Ausführungsform ferner zusätzlich einen Lichtstabilisator enthalten, um einen Photoabbau der Additiv-Zusammensetzung zu verhindern und damit die Langlebigkeit der erfindungsgemäßen Schlauchleitung zu erhöhen. Beispiele für den Lichtstabilisator beinhalten Verbindungen, die Oxidationsreaktionen inhibieren, wie z.B. Ultraviolett-Absorptionsmittel und Antioxidantien. Der Lichtstabilisator kann auch zusammen mit dem Additiv mikroverkapselt werden.

Das Additiv kann in einer weiteren Ausführungsform zusätzlich umhüllt sein, d.h. mit einer oder mehreren anorganischen oder organischen Hüllen umgeben sein. Die Hülle kann beispielsweise Siliziumoxid, Aluminiumoxid, Zinnoxid, Titanoxid, Aluminiumphosphat, Aluminium-Zink-Phosphat, einem Organopolysiloxan, Siliziumnitrid, Siliziumcarbid und/oder Aluminiumnitrid enthalten.

Gemäß einer besonders bevorzugten Ausführungsform der erfindungsgemäßen Schlauchleitung weist die Wandung mindestens eine Schicht auf, die einen thermoplastischen Kunststoff umfasst, wobei ein oder mehrere der oben beschriebenen Additive in dem thermoplastischen Kunststoff enthalten sind.

Bei der Schicht kann es sich beispielsweise um eine Beschichtung der inneren Oberfläche der Schlauchwandung handeln, wie z.B. eine Auskleidung eines aus extrudierten Profilfahnen aufgebauten Spiralschlauches, wie er z.B. in der DE 10 2006 019 562 beschrieben ist. Die Anordnung des Additivs in einer Beschichtung der zum Schlauchinneren zeigenden Oberfläche der Schlauchleitung weist den Vorteil auf, dass die Betriebsparameter der Schlauchwandung, z.B. die Temperatur, direkt an der Kontaktzone zwischen der Schlauchwandung und dem in der Schlauchleitung enthaltenen Medium bestimmt werden kann.

Für den Fall, dass das Additiv ein farbveränderndes Additiv, d.h. ein thermochromes, photochromes oder piezochromes Additiv, umfasst, ist die Schlauchwandung an sich vorzugsweise transparent ausgestaltet, so dass die Farbveränderung auch von außen wahrnehmbar ist.

In einer anderen Ausführungsform ist das Additiv in einer Beschichtung der äußeren Oberfläche der Schlauchwandung enthalten. Beispiele für eine derartige Beschichtung umfassen eine Schutzbeschichtung oder sog. Scheuerschutz, d.h. eine von außen aufgebrachte Beschichtung oder ein von außen aufgesetztes Kunststoffprofil, das die Schlauchleitung vor Abrieb oder Verkratzen der äußeren Oberfläche schützt. Diese Ausführungsform weist den Vorteil auf, dass die Farbänderungen von thermochromen, photochromen und piezochromen Additiven besonders gut wahrnehmbar sind.

Eine Schicht der Schlauchwandung im Sinne dieser Anmeldung schließt auch die Wandung an sich ein. So kann in einer weiteren Ausführungsform das Additiv in der Wandung eines oben beschriebenen thermoplastischen Spiral- oder Glattschlauches enthalten sein. Beispielsweise ist das Additiv vorzugsweise gleichmäßig in der extrudierten Profilfahne eines oben beschriebenen thermoplastischen Schlauches enthalten. Für den Fall, dass die Schlauchwandung mehrere Schichten aufweist, wie z.B. ein Schlauch, der nach der oben beschriebenen "SandwichBauweise" aufgebaut ist, können eine oder mehrere der Schichten das Additiv enthalten.

Gemäß einer weiteren bevorzugten Ausführungsform der Erfindung weist die Wandung der Schlauchleitung ein Verstärkungselement, insbesondere eine helixförmig verlaufende Verstärkungswendel, auf, wobei das Verstärkungselement eine Beschichtung, insbesondere eine Beschichtung aus thermoplastischen Kunststoff, aufweist und das Additiv in der Beschichtung des Verstärkungselements enthalten ist. In dieser Ausführungsform wird das Verstärkungselement, wie eine Verstärkungswendel, die typischerweise aus Metalldraht oder Kunststoff besteht, in einem separaten Schritt oder einem in einem in die Produktion der endgültigen Schlauchleitung integrierten Schritt, z.B. mittels eines Online- oder Coextrusionsverfahrens, mit einem Additiv beschichtet. Der Vorteil dieser Ausführungsform liegt insbesondere darin, dass mögliche negative Einflüsse des Additivs auf die Extrudier- oder Verschweißbarkeit des thermoplastischen Kunststoffmaterials der eigentlichen Schlauchwandung vermieden werden. Dies gilt sowohl für eingebettete, d.h. innenliegende, Verstärkungselemente als auch für außenliegende, wie z.B. aufgeschweißte Verstärkungselemente.

Gemäß einer weiteren bevorzugten Ausführungsform der Erfindung weist die Schlauchwandung ein beschichtetes Gewebe auf, wobei das Additiv in der Beschichtung des Gewebes enthalten ist. Beispielsweise ist es sinnvoll einen Gewebeschlauch, der für Hochtemperaturanwendungen vorgesehen ist, mit einer Beschichtung auszugestalten, die ein thermochromes Additiv umfasst, um so festzustellen, wenn das Hochtemperaturmedium den vorgegebenen Temperaturbereich überschreitet.

Es ist erfindungsgemäß nicht notwendig, dass die gesamte Schlauchwand ein Sensormaterial, wie z.B. Additiv, aufweist. Vielmehr ist es auch möglich, einen mit dem Additiv ausgerüsteten Gewebe- oder Folienstreifen an der Schlauchwand anzubringen. Dieser angebrachte Streifen wäre ebenfalls in der Lage, die eingangs beschriebene Überwachung von Betriebsparametern zu gewährleisten.

Gemäß einem zweiten Aspekt der vorliegenden Erfindung ist das Sensormaterial als Messwertaufnehmer ausgestaltet.

In einer bevorzugten Ausführungsform ist der Messwertaufnehmer ausgewählt aus der Gruppe bestehend aus einem elektrischem Leiter, einem Lichtwellenleiter, einem Dehnungsmessstreifen und Kombinationen davon.

Unter dem Begriff "elektrischer Leiter" wird im Sinne dieser Anmeldung ein Element, insbesondere ein metallischer Leiter, mit guter elektrischer Leitfähigkeit verstanden, das keinen wesentlichen Beitrag zur mechanischen Festigkeit, insbesondere der Biegesteifigkeit und Zugfestigkeit, der Schlauchleitung leistet. Im Unterschied zu einer typischerweise in Spiralschläuchen verwendeten Verstärkungswendel leistet der elektrische Leiter somit insbesondere keinen wesentlichen Beitrag zur Scheiteldruckfestigkeit der Schlauchleitung, d.h. dem Widerstand gegen Zusammendrücken der Schlauchleitung durch eine äußere im Scheitel der Schlauchleitung aufgebrachte Last. Mithin wird die Scheiteldruckfestigkeit der Schlauchleitung durch die Anwesenheit des elektrischen Leiters in oder an der Schlauchwand vorzugsweise nicht oder nur sehr geringfügig erhöht.

In einer bevorzugten Ausführungsform ist der elektrische Leiter derartig ausgestaltet, dass er einen Verstärkungsfaktor von weniger als 10, besonders bevorzugt weniger als 5 oder 2 und insbesondere weniger als 1,5 oder 1,2 aufweist. Als Verstärkungsfaktor wird dabei der Quotient aus der Biegekraft der Schlauchleitung mit elektrischem Leiter und der Biegekraft der entsprechenden Schlauchleitung ohne elektrischen Leiter bezeichnet. Zur Bestimmung wird ein zu testender elektrischer Leiter helixförmig, d.h. spiralförmig, in einen Schlauch bestehend aus thermoplastischem Polyurethan, insbesondere Polyester-Polyurethan mit einer Härte von 80 Shore A, mit einer Wandstärke gemäß DIN 26057 von 1,4 mm eingebracht, wobei die Schlauchleitung neben dem elektrischen Leiter kein verstärkendes Element, wie z.B. eine Verstärkungswendel, umfasst. Anschließend wird die Biegekraft dieser ersten Schlauchleitung gemäß DIN 26057 bestimmt und mit der Biegekraft gemäß DIN 26057 einer zweiten Schlauchleitung ins Verhältnis gesetzt, die sich lediglich dadurch von der ersten Schlauchleitung unterscheidet, dass sie den elektrischen Leiter nicht umfasst.

Vorzugsweise beträgt der Durchmesser des elektrischen Leiter, z.B. der Durchmesser eines Metalldrahts, weniger als 1 mm, besonders bevorzugt weniger als 0,8, 0,7, 0,6, 0,5, 0,3 oder 0,1 mm.

Die elektrischen Eigenschaften, wie z.B. die Leitfähigkeit, eines elektrischen Leiters hängen u.a. von seiner Länge und seinem Durchmesser ab, so dass eine Änderung dieser Größen, z.B. aufgrund einer thermischen Längenänderung durch Erwärmung der Schlauchleitung oder aufgrund einer mechanischen Längenänderung durch Dehnung der Schlauchleitung, eine messbare Änderung der elektrischen Leitfähigkeit hervorruft. Beispielsweise wird erfindungsgemäß vorgesehen, dass der elektrische Leiter bei einer Druck- oder Temperatureinwirkung seine elektrische Leitfähigkeit ändert und somit eine Änderung der Betriebstemperatur oder des Betriebsdruckes der Schlauchleitung anhand des geänderten elektrischen Verhaltens erkennbar wird. Mit Hilfe eines erfindungsgemäß eingesetzten elektrischen Leiters kann auch die Integrität der Schlauchleitung ermittelt werden, da beispielsweise eine Beschädigung der Schlauchleitung und somit ein Bruch des elektrischen Leiters aufgrund der stark veränderten Leitfähigkeit erkennbar wird.

In einer besonders bevorzugten Ausführungsform ist der elektrische Leiter ein sog. Thermoelement, d.h. ein Paar metallischer Leiter aus unterschiedlichem Material, die an einem Ende verbunden sind. Aufgrund des sog. thermoelektrischen Effekts, d.h. durch Ermittlung der an den freien Enden auftretenden elektrischen Spannung, kann die Temperatur an den verbundenen Enden bestimmt werden.

Unter dem Begriff "Lichtwellenleiter" wird im Sinne dieser Anmeldung eine Leitung zur Übertragung von Licht verstanden, wie z.B. eine Glasfaserleitung. Der Lichtwellenleiter kann je nach Einsatzgebiet der Schlauchleitung einen Durchmesser von einigen Mikrometern bis einigen Millimetern aufweisen. Die optischen Eigenschaften eines Lichtwellenleiters hängen u.a. von seiner Länge und seinem Durchmesser ab, so dass eine Änderung dieser Größen, z.B. aufgrund einer thermischen Längenänderung durch Erwärmung der Schlauchleitung oder aufgrund einer mechanischen Längenänderung durch Dehnung der Schlauchleitung, eine messbare Änderung der optischen Leitfähigkeit hervorruft. Beispielsweise wird erfindungsgemäß vorgesehen, dass der Lichtwellenleiter bei einer Druck- oder Temperatureinwirkung seine optische Leitfähigkeit ändert und somit eine Änderung der Betriebstemperatur oder des Betriebsdruckes der Schlauchleitung anhand des geänderten optischen Verhaltens erkennbar wird. Mit Hilfe eines erfindungsgemäß eingesetzten Lichtwellenleiters kann auch die Integrität der Schlauchleitung ermittelt werden, da beispielsweise eine Beschädigung der Schlauchleitung und somit ein Bruch des Lichtwellenleiters aufgrund der stark veränderten Leitfähigkeit erkennbar wird.

In einer besonders bevorzugten Ausführungsform ist der Lichtwellenleiter ein faseroptischer Sensor und insbesondere ein inhärenter faseroptischer Sensor, wie z.B. ein faseroptischer Drucksensor, bei dem durch Druck induzierte Biegeverluste zu Transmissionsänderungen in der Glasfaser führen, oder ein faseroptischer Temperatursensor zur ortsaufgelösten Temperaturmessung durch temperaturabhängige Raman-Streuung in der Glasfaser.

In einer bevorzugten Ausführungsform erstreckt sich ein elektrischer Leiter und/oder Lichtwellenleiter in axialer Richtung der Schlauchleitung. Es ist besonders bevorzugt, dass sich der elektrische Leiter und/oder Lichtwellenleiter parallel zur Schlauchachse oder helixförmig um die Schlauchachse herum erstreckt. Insbesondere ist es dabei bevorzugt, dass die Wandung einen thermoplastischen Kunststoff umfasst und der elektrische Leiter und/oder Lichtwellenleiter in den thermoplastischen Kunststoff eingebettet sind. Ein Vorteil der zuletzt genannten Ausführungsform ist, dass eine derartige Schlauchleitung besonders einfach bereit gestellt werden kann, indem eine Kunststoffschmelze in einen Extrusionskopf zur Bildung einer extrudierten Werkstoffbahn geleitet und der elektrische Leiter und/oder der Lichtwellenleiter beim Extrudieren der Werkstoffbahn mit der Werkstoffbahn verbunden wird. Weist die Schlauchleitung eine Verstärkungswendel auf, so wird der elektrische Leiter und/oder der Lichtwellenleiter vorzugsweise in einem definierten Abstand zum Verstärkungselement in die Werkstoffbahn eingebracht.

Gemäß einer alternativen Ausführungsform weist die Schlauchwandung ein Gewebe auf und der elektrische Leiter und/oder der Lichtwellenleiter sind in das Gewebe eingewebt. Auch diese Ausführungsform ist mittels typischer Webverfahren einfach und effizient zu realisieren.

Im Falle der Verwendung eines elektrischen Leiters als Messwertaufnehmer ist es außerdem bevorzugt, wenn die Schlauchwandung ein Gewebe aufweist und der elektrische Leiter fadenförmig ausgestaltet ist, z.B. als leitfähiges Garn, und auf die Wandung oder ein an der Wandung angebrachtes Trägermaterial gestickt ist. In dieser Ausführungsform weist der elektrische Leiter vorzugsweise einen Fadendurchmesser von wenigen Mikrometeren bis einigen Zehntelmillimeter auf, wie z.B. 10 µm bis 0,5 mm oder vorzugsweise 50 µm bis 0,3 mm. Als Stickmuster eignet sich beispielsweise eine schlaufenförmige Anordnung des elektrischen Leiters. Gemäß einer Ausführungsform ist das gestickte Sensormaterial auf der Schlauchinnenseite angeordnet.

Im Falle eines gestickten Sensormaterials hängen die elektrischen Eigenschaften, wie z.B. die Leitfähigkeit, des elektrischen Leiters nicht nur von seiner Länge und seinem Durchmesser, sondern auch von seiner relativen Anordnung in dem Stickmuster ab, so dass eine Änderung des Stickmusters, z.B. aufgrund einer thermischen Längenänderung durch Erwärmung der Schlauchleitung oder aufgrund einer mechanischen Längenänderung durch Dehnung, Drücke oder Vibrationen, mit einer messbare Änderung der elektrischen Leitfähigkeit einhergeht. Mithin ist es möglich, dass das gestickte Sensormaterial bei einer Druck- oder Temperatureinwirkung seine elektrische Leitfähigkeit ändert und somit eine Änderung der Betriebstemperatur oder des Betriebsdruckes der Schlauchleitung anhand des geänderten elektrischen Verhaltens erkennbar wird.

Gemäß einer weiteren Ausführungsform ist an der Schlauchwandung ein Dehnungsmessstreifen angebracht. Der Dehnungsmessstreifen lässt sich vorzugsweise durch Nähen, Kleben oder andere Fügetechniken mit der Schlauchwandung oder einer Schlauchkupplung oder einem Anschlussteil davon verbinden.

Dehnungsmessstreifen sind im Stand der Technik bekannt und stellen Einrichtungen zur Erfassung von dehnenden und stauchenden Verformungen dar. Sie ändern schon bei geringen Verformungen ihren elektrischen Widerstand, so dass aus der Größe des elektrischen Widerstands auf Verformungen der Schlauchleitung aufgrund eines im Schlauchinneren anliegenden Druckes oder aufgrund einer Dehnung oder Kompression der Schlauchleitung geschlossen werden kann.

Während bei flexiblen Schlauchleitungen, die ein farbveränderliches Additiv, z.B. ein thermochromes, photochromes oder piezochromes Additiv, als Sensormaterial enthalten, der Betriebsparameter bereits rein optisch ermittelt werden kann, weisen Schlauchleitungen mit Messwertaufnehmern oder elektrisch reaktivem Funktionsadditiv als Sensormaterial vorzugsweise einen Anschluss und eine Peripherie zur Auswertung der z.B. elektrischen oder optischen Signale auf.

In einer besonders bevorzugten Ausführungsform umfasst die erfindungsgemäße flexible Schlauchleitung somit ferner eine Einrichtung zur Erfassung von für die Materialeigenschaften des Sensormaterials repräsentativen Messdaten sowie ggf. eine Einrichtung zur Übertragung der Messdaten an eine Datenverarbeitungseinrichtung.

Die Einrichtung zur Erfassung von für die Materialeigenschaften des Sensormaterials repräsentativen Messdaten ist somit vorzugsweise geeignet das elektrische oder optische Verhalten des Sensormaterials zu erfassen. Beispielsweise stellt die Einrichtung zur Erfassung von für die Materialeigenschaften des Sensormaterials repräsentativen Messdaten einen elektrischen Widerstandsmesser oder Durchgangsmesser dar, der mit dem Sensormaterial, wie z.B. einer piezoelektrischen Additiv enthaltenden Schicht der Schlauchwandung oder einem elektrischen Leiter oder Dehnungsmessstreifen, elektrisch leitend verbunden ist.

Die von der Einrichtung erfassten Messdaten können direkt an der Einrichtung und somit direkt an der Schlauchleitung z.B. mittels eines Displays angezeigt werden. Es ist auch möglich, die Messdaten mit Hilfe eines Kabels oder kabellos an eine Speichereinrichtung oder eine Datenverarbeitungseinrichtung zu übertragen.

In einer bevorzugten Ausführungsform weist die erfindungsgemäße Schlauchleitung somit ferner eine Speichereinrichtung und/oder eine Einrichtung zur Übertragung der Messdaten an eine Datenverarbeitungseinrichtung auf.

In einer Ausführungsform ist in der Speichereinrichtung eine die Schlauchleitung eindeutig kennzeichnende Identitätskennung gespeichert, wobei die Einrichtung zur Erfassung von für die Materialeigenschaften des Sensormaterials repräsentativen Messdaten und die Speichereinrichtung mit der Datenübertragungseinrichtung zur Datenfernübertragung verbunden sind, sodass die Identitätskennung über die Datenübertragungseinrichtung abfragbar ist. Insbesondere ist es bevorzugt, dass die Einrichtung zur Erfassung von für die Materialeigenschaften des Sensormaterials repräsentativen Messdaten dazu eingerichtet ist, für die Betriebshistorie der Schlauchleitung repräsentative Daten einschließlich Betriebszeiten und Messdaten für Betriebsparameter oder daraus abgeleitete Betriebsgrößen in der Speichereinrichtung zu speichern.

Des Weiteren ist die Einrichtung zur Erfassung von für die Materialeigenschaften des Sensormaterials repräsentativen Messdaten vorzugsweise dazu eingerichtet, Messdaten zusammen mit der aus der Speichereinrichtung abgerufenen Identitätskennung automatisch periodisch über die Datenübertragungseinrichtung zu senden oder auf ein externes Abfragesignal an die Datenübertragungseinrichtung hin über diese zu senden.

In einer bevorzugten Ausführungsform ist die Speichereinrichtung ein sog. RFID-Chip, der in der Schlauchwandung oder in einem Anschlussstück integriert ist.

Ein großer Vorteil der oben beschriebenen erfindungsgemäßen Schlauchleitung besteht darin, dass der Anwender das offenbarte System zur Überwachung der Betriebsparameter der Schlauchleitung ohne Weiteres mit einem vorhandenen System zur Steuerung der Fördereigenschaften der Schlauchleitung kombinieren kann, so dass der Aufwand zur Implementierung des Systems und der Erwerb zusätzlicher elektronischer Komponenten minimal ist.

In einer Ausführungsform weist die erfindungsgemäße Schlauchleitung eine Kombination von zwei oder mehreren der oben genannten Sensormaterialien auf, wie eine Kombination von zwei oder mehr Additiven, z.B. eine Kombination eines thermochromen Additivs und eines piezoelektrischen Additivs, eine Kombination von zwei oder mehr Messwertaufnehmern, z.B. eine Kombination von Lichtwellenleitern und elektrischen Leitern, oder eine Kombination von einem oder mehreren Additive mit einem oder mehreren Messwertaufnehmern.

Wie oben gezeigt, eignet sich das oben beschriebene Sensormaterial hervorragend zur Ermittlung von Betriebsparametern von Schlauchleitungen. Demgemäß betrifft die vorliegende Erfindung auch die Verwendung von in der Wandung einer Schlauchleitung integriertem Sensormaterial, das eine sich mit einem zu ermittelnden Betriebsparameter der Schlauchleitung veränderliche Materialeigenschaft hat, zur Überwachung von Betriebsparametern von flexiblen Schlauchleitungen. Mithin betrifft die Erfindung auch die Verwendung der erfindungsgemäßen flexiblen Schlauchleitung zur Bestimmung und Überwachung von Betriebsparametern der Schlauchleitung.

Des Weiteren betrifft die Erfindung auch ein Verfahren zur Herstellung einer erfindungsgemäßen Schlauchleitung, bei dem das Sensormaterial vor, während oder nach der Erzeugung der flexiblen Schlauchleitung in oder an die Schlauchwandung gebracht wird. Bevorzugte Aspekte des erfindungsgemäßen Herstellungsverfahrens sind oben im Zusammenhang mit der Beschreibung von bevorzugtem Sensormaterial offenbart.

Im Folgenden wird die vorliegende Erfindung anhand von lediglich bevorzugten Ausführungsbeispielen und den Zeichnungen näher erläutert. Es zeigen:
- Figur 1:: eine Schlauchleitung gemäß einer ersten Ausführungsform der Erfindung in einer Schnittansicht;
- Figur 2:: eine Schlauchleitung gemäß einer zweiten Ausführungsform der Erfindung in einer Draufsicht;
- Figur 3:: eine Schlauchleitung gemäß einer dritten Ausführungsform der Erfindung in einer Draufsicht; und
- Figur 4:: eine Schlauchleitung gemäß einer vierten Ausführungsform der Erfindung in einer Draufsicht.

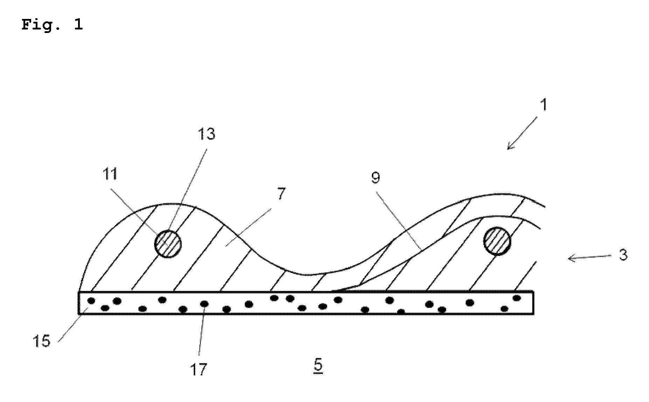

Die Figur 1 zeigt einen Abschnitt einer Schlauchleitung 1 bzw. eines Schlauches mit einer Schlauchwandung 3, die das Schlauchinnere 5 umgibt. Die Schlauchwandung 3 weist eine helixförmig verlaufende Werkstoffbahn 7 auf, bei der es sich um eine schraubenlinienförmig aufgewendelte extrudierte Profilfahne aus transparentem thermoplastischem Kunststoff handelt, wobei benachbarte Abschnitte der Werkstoffbahn im Randbereich 9 überlappend miteinander verbunden sind. In die Werkstoffbahn 7 ist ein Verstärkungselement 11 in Form einer Drahtspirale eingebetet, die sich ebenfalls helixförmig in Schlauchrichtung bzw. in Längsrichtung der Schlauchleitung 1 erstreckt.

Das Verstärkungselement 11 weist eine Beschichtung 13 auf, in der thermochromes Additiv enthalten ist, das bis zu einer Temperatur von 80°C transparent ist und bei einer Temperatur von höher als 80°C spontan seine Farbe ändert. Auf diese Art und Weise kann ein Betreiber schnell, kostengünstig und zuverlässig erkennen, wenn die Temperatur der Wandung 3 der Schlauchleitung 1 einen kritischen Wert von 80°C überschritten hat. Die Beschichtung 13 wird erhalten, indem die Drahtspirale des Verstärkungselements 11 zunächst mit dem thermochromen Additiv beschichtet wird und anschließend mit einer dünnen Schicht eines transparenten Kunststoffes überzogen wird. Im Anschluss daran wird die beschichtete Drahtspirale einem standardmäßigen Fertigungsverfahren zur Herstellung von Spiralschläuchen zugeführt. Die Tatsache, dass das Additiv lediglich in der Beschichtung des Verstärkungselements 11 enthalten ist und die Werkstoffbahn 7 frei von thermochromen Additiv ist, führt zu dem weiteren Vorteil, dass die Qualität und Sicherheit der Verbindung benachbarter Werkstoffbahnen 7 in den Randbereichen 9 mittels Verschweißen und/oder Verkleben nicht negativ beeinträchtigt wird.

Die Schlauchwandung 3 weist ferner auf der zum Schlauchinneren 5 hinweisenden Oberfläche eine Beschichtung 15 auf, in der eine Vielzahl von Additivpartikeln 17 eingebettet sind. Die Additivpartikel 17 stellen in dieser Ausführungsform ebenfalls ein thermochromes Additiv dar, so dass mit dessen Hilfe die Temperatur der Schlauchwandung 3 im Bereich der Kontaktzone mit dem im Schlauchinneren 5 befindlichen Medium überwacht werden kann. Die Art der Farbänderung der Additivpartikel 17 unterscheidet sich vorzugsweise von der Farbänderung des in Beschichtung 13 enthaltenden Additivs. In jedem Fall kann eine Temperaturüberschreitung an der inneren Oberfläche der Schlauchwandung 3 auch bereits schon deshalb von einer Temperaturüberschreitung im Bereich des Verstärkungselements 11 unterschieden werden, da die durch Additivpartikel 17 hervorgerufene Farbänderung im Wesentlichen über einen großen Bereich der Beschichtung 15 und nicht nur im Bereich des Verstärkungselements 11 zu beobachten ist.

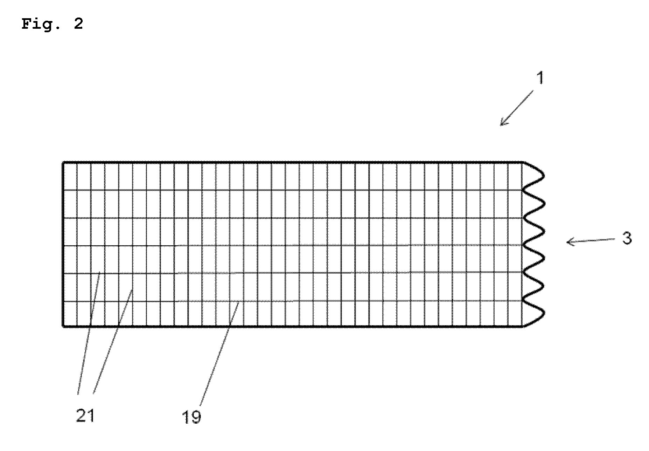

Die Figur 2 zeigt eine Draufsicht auf eine zweite Ausführungsform einer erfindungsgemäßen Schlauchleitung 1. Die Schlauchwandung 3 weist in dieser Ausführungsform ein Gewebe 19 auf, das durch Verweben von Kunststoffgarnen 21 gebildet ist. Die Kunststoffgarne 21 weisen eine Beschichtung aus thermoplastischem Kunststoff auf, in der thermochromes Additiv enthalten ist. Durch Auswahl eines geeigneten thermochromen Additivs kann somit auf einfache Weise das Überschreiten einer vorgegebenen maximalen Betriebstemperatur der Schlauchleitung 1 gewährleistet werden.

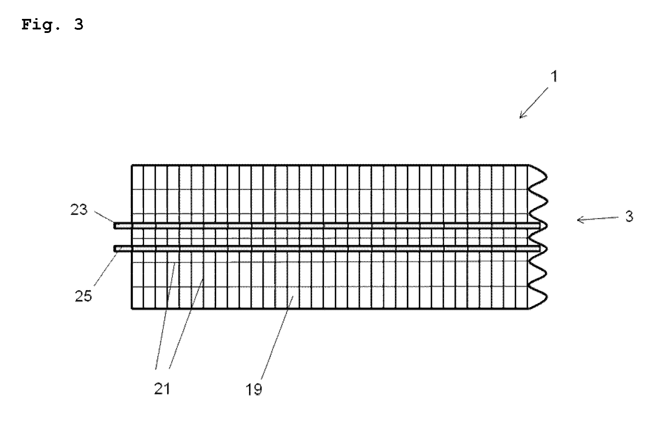

Auch Figur 3 zeigt eine Schlauchleitung 1, bei der die Wandung 3 aus einem Gewebe 19 gebildet wird. In dieser Ausführungsform ist ein elektrischer Leiter 23 und ein Lichtwellenleiter 25 in das Gewebe 19 eingewebt, indem der elektrische Leiter 23 und der Lichtwellenleiter 25 mit den Garnen 21 verwebt sind. Sowohl der elektrische Leiter 23 als auch der Lichtwellenleiter 25 erstrecken sich in axialer Richtung 27 der Schlauchleitung.

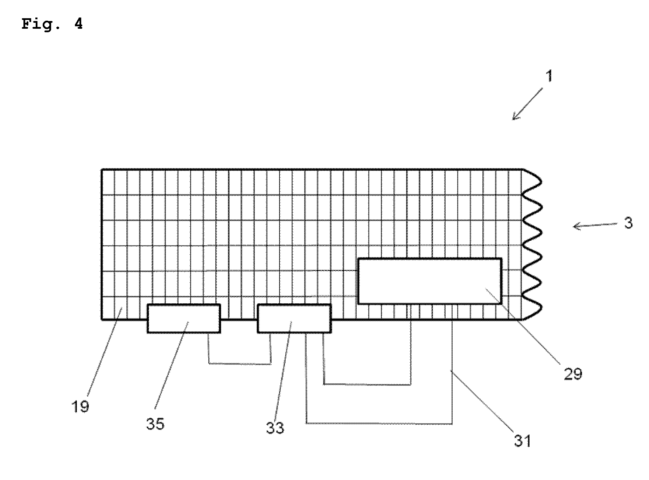

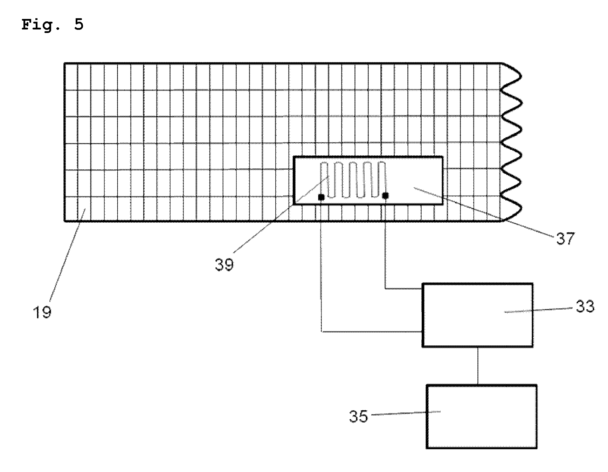

Die Figur 4 zeigt ebenfalls eine Schlauchleitung 1, bei der die Wandung 3 aus einem Gewebe 19 gebildet wird. In dieser Ausführungsform ist ein Dehnungsmessstreifen 29 auf dem Gewebe 19 befestigt. Die Anschlüsse 31 des Dehnungsmessstreifen 29 sind mit einer Einrichtung 33 zur Erfassung der elektrischen Leitfähigkeit des Dehnungsmessstreifens 29 verbunden. Ferner weist die Schlauchleitung 1 eine Einrichtung 35 zur Übertragung der Messdaten an eine Datenverarbeitungseinrichtung (nicht in Figur 5 dargestellt). Sowohl Einrichtung 33 als auch Einrichtung 35 sind an der Schlauchleitung 1 angebracht, so dass der Anwender kein externes Zubehör benötigt, sondern die Schlauchleitung 1 eine wirksame und einfache Überwachung von Betriebsparametern des Schlauches ermöglicht.

Die Figur 5 zeigt eine Schlauchleitung 1, bei der die Wandung 3 aus einem Gewebe 19 gebildet ist, auf dessen Außenseite ein Trägermaterial 37 aufgebracht ist, auf dem ein elektrischer Leiter 39 gestickt ist. Das gestickte Sensormaterial 39 ändert bei einer Druck- oder Temperatureinwirkung seine elektrische Leitfähigkeit, so dass mit Hilfe der Einrichtung 33 zur Erfassung der elektrischen Leitfähigkeit und der Einrichtung 35 zur Übertragung der Messdaten an eine Datenverarbeitungseinrichtung eine Änderung der Betriebstemperatur oder des Betriebsdruckes der Schlauchleitung erkennbar wird.

## Patentansprüche

1. Flexible Schlauchleitung (1) mit einer Wandung (3), wobei die Wandung (3) integriertes Sensormaterial (17, 23, 25, 29, 39) aufweist, das eine sich mit einem zu ermittelnden Betriebsparameter der Schlauchleitung (1) veränderliche Materialeigenschaft hat.

2. Flexible Schlauchleitung (1) nach Anspruch 1, wobei das integrierte Sensormaterial in Form von mindestens einem Additiv (17) und/oder in Form von mindestens einem Messwertaufnehmer (23, 25, 29, 39) ausgebildet ist.

3. Flexible Schlauchleitung (1) nach Anspruch 2, wobei das Additiv (17) ausgewählt sind aus der Gruppe bestehend aus thermochromen Additiven, piezochromen Additiven, piezoelektrischen Additiven, photochromen Additiven und Mischungen davon.

4. Flexible Schlauchleitung (1) nach Anspruch 2 oder 3, wobei die Wandung (3) mindestens eine Schicht (15) aufweist, die einen thermoplastischen Kunststoff umfasst, und das Additiv (17) in dem thermoplastischen Kunststoff enthalten ist.

5. Flexible Schlauchleitung (1) nach Anspruch 2 oder 3, wobei die Wandung (3) ein helixförmig verlaufendes Verstärkungselement (11) mit einer Beschichtung (13) aufweist und das Additiv in der Beschichtung (13) des Verstärkungselements (11) enthalten ist.

6. Flexible Schlauchleitung (1) nach Anspruch 2 oder 3, wobei die Wandung (3) ein Gewebe (19) aufweist und das Additiv in einer Beschichtung des Gewebes (19) enthalten ist.

7. Flexible Schlauchleitung (1) nach Anspruch 2, wobei der mindestens eine Messwertaufnehmer ausgewählt ist aus der Gruppe bestehend aus einem elektrischem Leiter (23, 39), einem Lichtwellenleiter (25), einem Dehnungsmessstreifen (29) und Kombinationen davon.

8. Flexible Schlauchleitung (1) nach Anspruch 7, wobei sich ein elektrischer Leiter (23, 39) und/oder Lichtwellenleiter (25) in axialer Richtung der Schlauchleitung (1) erstreckt, und sich insbesondere parallel zur Schlauchachse oder helixförmig um die Schlauchachse herum erstreckt.

9. Flexible Schlauchleitung (1) nach Anspruch 8, wobei die Wandung (3) mindestens eine Schicht aufweist, die einen thermoplastischen Kunststoff umfasst, und der elektrische Leiter und/oder Lichtwellenleiter in die Schicht eingebettet sind.

10. Flexible Schlauchleitung (1) nach Anspruch 8, wobei die Wandung ein Gewebe (19) aufweist und der elektrische Leiter (23, 39) und/oder Lichtwellenleiter (25) in das Gewebe eingewebt sind.

11. Flexible Schlauchleitung (1) nach Anspruch 7, wobei die Wandung (3) ein Gewebe (19) aufweist und der elektrische Leiter (39) fadenförmig ausgestaltet ist und auf die Wandung (3) oder ein an der Wandung (3) angebrachtes Trägermaterial (37) gestickt ist.

12. Flexible Schlauchleitung (1) nach Anspruch 7, wobei an der Wandung (3) ein Dehnungsmessstreifen (29) angebracht ist.

13. Flexible Schlauchleitung (1) nach einem der vorhergehenden Ansprüche, wobei der Betriebsparameter der Schlauchleitung (1) ausgewählt ist aus der Gruppe bestehend aus der Temperatur der Schlauchwandung, dem auf die Schlauchwandung einwirkenden Über- oder Unterdruck, der Integrität der Schlauchwandung, dem Biegeradius der Schlauchleitung, der Dehnung oder Kompression der Schlauchleitung, der Vibration und dem Alterungsgrad des Materials der Schlauchwandung.

14. Flexible Schlauchleitung (1) nach einem der vorhergehenden Ansprüche ferner umfassend eine Einrichtung (33) zur Erfassung von für die Materialeigenschaften des Sensormaterials repräsentativen Messdaten und ggf. eine Einrichtung (35) zur Übertragung der Messdaten an eine Datenverarbeitungseinrichtung.

15. Verwendung von in der Wandung (3) einer Schlauchleitung (1) integriertem Sensormaterial, das eine sich mit einem zu ermittelnden Betriebsparameter der Schlauchleitung (1) veränderliche Materialeigenschaft hat, zur Überwachung von Betriebsparametern von flexiblen Schlauchleitungen (1).
